# EUROPÄISCHE PATENTANMELDUNG

(11) **EP 3 549 812 A1**
(43) Veröffentlichungstag der Anmeldung: **09.10.2019**
(21) Anmeldenummer: 19162475.8
(22) Anmeldetag: 13.03.2019
(51) Int. Cl.: B60L 53/14, B60L 53/10, B60L 58/20, B60L 5/04, B60L 53/20, B60L 53/35

(54) **LADESYSTEM UND VERFAHREN ZUM AUFLADEN EINES JEWEILIGEN ELEKTRISCHEN ENERGIESPEICHERS MEHRERER KRAFTFAHRZEUGE SOWIE STATIONÄRE LADEVORRICHTUNG UND KRAFTFAHRZEUG**

(30) Priorität: 04.04.2018 DE 102018205040
(71) Anmelder: AUDI AG, 85045 Ingolstadt (DE)
(72) Erfinder: Dehm, Martin, 86643 Rennertshofen (DE)

(57) **Zusammenfassung**

Die Erfindung betrifft ein Ladesystem (S) zum Aufladen eines jeweiligen elektrischen Energiespeichers (12) mehrerer Kraftfahrzeuge (11), umfassend eine stationäre Ladevorrichtung (10) und die Kraftfahrzeuge (11), wobei eine zentrale Wandlereinrichtung (14) dazu eingerichtet ist, eine Wechselspannung (Uac) in eine Gleichspannung (U) umzuwandeln. Die Erfindung sieht vor, dass eine Verteilungseinrichtung (15) dazu eingerichtet ist, die Gleichspannung (U) ohne einen weiteren Wandlerschritt von der Wandlereinrichtung (14) auf mehrere Ladeschnittstellen (16) zu verteilen, und jedes der Kraftfahrzeuge (11) jeweils eine Abgriffseinrichtung (21) zum Abgreifen der Gleichspannung (U) an jeweils einer der Ladeschnittstellen (16) aufweist, wobei die Abgriffseinrichtung (21) mit dem jeweiligen Energiespeicher (12) des Kraftfahrzeugs (11) über einen fahrzeugeigenen Gleichspannungswandler (22) gekoppelt ist und eine Steuereinrichtung (23) des Kraftfahrzeugs (11) dazu eingerichtet ist, einen zwischen der Ladeschnittstelle (16) und dem Energiespeicher (12) fließenden elektrischen Ladestrom (I1, I2) und/oder eine übertragene elektrische Ladeleistung durch Steuern des Gleichspannungswandlers (22) einzustellen.

## Beschreibung

Die Erfindung betrifft ein Ladesystem zum Aufladen eines jeweiligen elektrischen Energiespeichers mehrerer Kraftfahrzeuge. Durch das Ladesystem ist eine stationäre Ladevorrichtung bereitgestellt, die eine Ladeinfrastruktur darstellt, an welcher die Kraftfahrzeuge eine elektrische Gleichspannung zum Aufladen ihres jeweiligen elektrischen Energiespeichers abgreifen können. Die Erfindung umfasst auch die stationäre Ladevorrichtung sowie ein Kraftfahrzeug, die beide jeweils Bestandteil des Ladesystems sein können. Schließlich ist durch die Erfindung auch ein Verfahren zum Aufladen eines jeweiligen elektrischen Energiespeichers mehrerer Kraftfahrzeuge bereitgestellt.

Ein Ladesystem der eingangs genannten Art ist aus der DE 10 2011 079 430 A1 bekannt. Bei dem bekannten Ladesystem ist vorgesehen, dass eine zentrale Wandlereinrichtung aus einer Wechselspannung eines öffentlichen Stromnetzes eine Gleichspannung erzeugt, die mittels eines Verteilsystems auf mehrere Gleichspannungs-Ladepunkte verteilt wird. An jedem Ladepunkt ist ein zusätzlicher Gleichspannungswandler bereitgestellt, welcher aus der Gleichspannung jeweils eine Ladespannung erzeugt, wie sie von einem an den Ladepunkt angeschlossenen Kraftfahrzeug benötigt wird. Nachteilig bei diesem Ladesystem ist, dass mit jedem Ladepunkt ein zusätzlicher Gleichspannungswandler benötigt wird, um die fahrzeugindividuelle Laderegelung mit verschiedenen Batteriespannungen zu ermöglichen. Dies macht die Bereitstellung des Ladesystems technisch aufwendig.

Zudem ist ein solches Ladesystem unflexibel, wenn es um die temporäre Installation oder Bereitstellung von Ladepunkten geht.

Aus der DE 10 2013 200 949 A1 ist eine Ladeeinrichtung zum Laden einer Anzahl von Elektrofahrzeugen bekannt. Bei diesem Ladesystem ist eine zentrale Wandlereinrichtung zum Wandeln einer Wechselspannung eines öffentlichen Stromnetzes in eine Gleichspannung vorgesehen. Die Gleichspannung wird zu einzelnen Ladeschnittstellen mittels eines Batterie-Puffersystems übertragen. Für den Fall, dass nur eine einzelne Ladeschnittstelle versorgt wird, kann vorgesehen sein, dass das Puffersystem zwei Batterien aufweist, von denen stets eine mit der Wandlereinrichtung und die andere mit der Ladeschnittstelle verbunden ist. Hierdurch ist eine galvanische Trennung zwischen der Ladeschnittstelle und der zentralen Wandlereinrichtung garantiert. Allerdings benötigt dieses Ladesystem mit jeder zusätzlichen Ladeschnittstelle einen zusätzlichen Tiefsetzsteller der zwischen der Batterie-Puffereinrichtung und der jeweiligen Ladeschnittstelle.

Aus der DE 10 2013 204 256 A1 ist ein Ladevorrichtung für ein Elektrofahrzeug bekannt, die mit einem dreiphasigen Wechselstrom aus einem dreiphasigen Wechselstromnetz speisbar ist und an ihrem Ausgang einen Ladestrom bereitstellt, der über ein Ladekabel dem Elektrofahrzeug zum Laden des elektrischen Energiespeichers zuführbar ist. In der Ladevorrichtung ist eine Wandlereinrichtung bereitgestellt, die aus dem dreiphasigen Wechselstrom als Ladestrom einen einphasigen Wechselstrom erzeugt. Mit dieser Ladevorrichtung kann also nur ein Wechselstrom als Ladestrom bereitgestellt werden.

Der Erfindung liegt die Aufgabe zugrunde, mehrere Kraftfahrzeuge mit einer Gleichspannung zum Aufladen von deren elektrischen Energiespeicher zu versorgen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Ladesystem zum Aufladen eines jeweiligen elektrischen Energiespeichers mehrerer Kraftfahrzeuge bereitgestellt. Das Ladesystem setzt sich aus der stationären Ladevorrichtung und den Kraftfahrzeugen zusammen. Eine zentrale Wandlereinrichtung der Ladevorrichtung ist dazu eingerichtet, eine Wechselspannung eines elektrischen Versorgungsnetzes oder Stromnetzes in eine Gleichspannung umzuwandeln. Die Wandlereinrichtung kann also zumindest einen Gleichrichter vorsehen. Die Wandlereinrichtung kann beispielsweise auf der Grundlage zumindest eines Schaltwandlers realisiert sein. Eine Verteilungseinrichtung der Ladevorrichtung ist dazu eingerichtet, die Gleichspannung ohne einen weiteren Wandlerschritt, also ungewandelt, von der Wandlereinrichtung auf mehrere Ladeschnittstellen zu verteilen. Jede der Ladeschnittstellen stellt somit die gleiche, von der Wandlereinrichtung erzeugte Gleichspannung für jeweils eines der Kraftfahrzeuge bereit. Jedes der Kraftfahrzeuge weist jeweils eine Abgriffseinrichtung auf, um die Gleichspannung an jeweils einer der Ladeschnittstellen abzugreifen. In dem jeweiligen Kraftfahrzeug ist die Abgriffseinrichtung mit dem jeweiligen Energiespeicher des Kraftfahrzeugs über einen fahrzeuginternen Gleichspannungswandler gekoppelt. Mit anderen Worten weist jedes Kraftfahrzeug seinen eigenen Gleichspannungswandler auf. Der Gleichspannungswandler kann beispielsweise auf der Grundlage zumindest eines Schaltwandlers realisiert sein. Eine Steuereinrichtung des Kraftfahrzeugs ist dazu eingerichtet, einen zwischen der Ladeschnittstelle und dem Energiespeicher fließenden elektrischen Übertragungsstrom oder Ladestrom und/oder eine übertragene elektrische Übertragungsleistung oder Ladeleistung durch Steuern des Gleichspannungswandlers einzustellen. Der Ladestrom kann von der Ladeschnittstelle in den Energiespeicher oder aus dem Energiespeicher in die Ladeschnistelle fließen. Entsprechend kann die Ladeleistung von der Ladeschnittstelle in den Energiespeicher oder aus dem Energiespeicher in die Ladeschnistelle übertragen werden. Ist der Gleichspannungswandler bidirektional betreibbar ausgestaltet, so können auch beide Übertragungsrichtungen (abwechselnd) vorgesehen sein.

Insgesamt wird also für jedes der Kraftfahrzeuge an den Ladeschnittstellen dieselbe Gleichspannung bereitgestellt. Das Anpassen der Gleichspannung an den Spannungspegel oder die Spannung des jeweiligen Energiespeichers erfolgt durch jedes Kraftfahrzeug selbst innerhalb des Kraftfahrzeugs mittels dessen Gleichspannungswandlers. Es wird die Spannung mittels des Gleichspannungswandlers dabei z.B. in der Weise eingestellt, dass sich ein Ladestrom einer vorgegebenen Sollstromstärke ergibt und/oder über den Gleichspannungswandler eine vorbestimmte Sollleistung übertragen wird.

Das erfindungsgemäße Ladesystem weist den Vorteil auf, dass es mit geringem schaltungstechnischem Aufwand in einem Ladepark für mehrere Kraftfahrzeuge bereitgestellt werden kann. Beispielsweise kann es in einem Parkhaus vorgesehen oder installiert sein oder dort temporär bereitgestellt werden. Es muss nur die stationäre Wandlereinrichtung bereitgestellt werden, die aus der Wechselspannung des Versorgungsnetzes eine einheitliche Gleichspannung für alle Ladeschnittstellen erzeugt. Jedes Kraftfahrzeug bringt dann seinen eigenen Gleichspannungswandler mit, um die an den Ladeschnittstellen bereitgestellte Gleichspannung an den Energiespeicher anzupassen.

Es kann dabei eine Kommunikation zwischen den Kraftfahrzeugen einerseits und einer Steuerzentrale der Ladevorrichtung andererseits vorgesehen sein, damit eine Leistungsübertragung oder ein Leistungsfluss der Wandlereinrichtung an die von den Kraftfahrzeugen insgesamt benötigte Ladeleistung angepasst wird. Mittels der Kommunikation kann jedes der Kraftfahrzeuge seinen Bedarf an Ladeleistung signalisieren und/oder dem jeweiligen Kraftfahrzeug ein Betrag der jeweils bereitstellbaren Ladeleistung signalisiert werden. Darauf kann die Steuereinrichtung des jeweiligen Kraftfahrzeugs mit einer korrespondierenden Steuerung für den von ihr gesteuerten Gleichspannungswandler reagieren. Die Kommunikation kann drahtlos beispielsweise über Funk oder drahtgebunden beispielsweise mittels einer Powerline-Kommunikation beispielsweise über die Verteilungseinrichtung und/oder die Ladeschnittstelle erfolgen.

Zu der Erfindung gehören auch Ausführungsformen, durch die sich zusätzliche Vorteile ergeben.

Eine Ausführungsform sieht vor, dass die Gleichspannung kleiner als 60 Volt ist. Es handelt sich also um ein hochvoltfreies Ladesystem. Hierdurch ergibt sich der Vorteil, dass geringere Berührschutzmaßnahmen für die Verteilungseinrichtung und die Ladeschnittstellen notwendig sind als bei einer Verwendung einer Gleichspannung größer als 60 Volt (sogenannte HochvoltSpannung). In jedem Kraftfahrzeug kann der besagte Gleichspannungswandler dann beispielsweise als Hochsetzsteller ausgestaltet sein, um die Gleichspannung in eine Hochvoltspannung größer als 60 Volt zu wandeln.

Eine Ausführungsform sieht vor, dass einige oder jede der Ladeschnittstellen jeweils eine Blockiereinrichtung zum Blockieren eines Stromaustritts aus der Ladeschnittstelle aufweisen. Die jeweilige Blockiereinrichtung ist gemäß einer Ausführungsform dazu eingerichtet, den Strom selbstständig bei Überschreiten eines Höchststromwerts zu blockieren. Hierdurch ergibt sich eine Schutzmaßnahme, welche einen Überstrom größer als der Höchststromwert, beispielsweise einen Kurzschlussstrom bei einem Kurzschluss, blockiert. Eine solche Blockiereinrichtung kann beispielsweise mittels einer Sicherung, zum Beispiel einer Schmelzsicherung oder einer Fehlerschutzsicherung, realisiert werden. Zusätzlich oder alternativ dazu ist gemäß einer Ausführungsform vorgesehen, dass die Blockiereinrichtung durch eine Steuerzentrale der Ladevorrichtung und/oder durch die jeweilige Steuereinheit der Kraftfahrzeuge schaltbar ausgestaltet ist. Mit anderen Worten umfasst die Blockiereinrichtung eine Schalteinrichtung, durch welche in vorteilhafter Weise durch die Steuerzentrale eine Einzelplatzüberwachung bezüglich des Abgriffs von elektrischer Leistung und/oder von elektrischem Strom ermöglicht ist. Eine solche Schalteinrichtung kann beispielsweise auf der Grundlage eines Schützes oder Relais oder eines Halbleiter-Leistungsschalters (z.B. mit einem oder mehreren Transistoren) realisiert sein. Mittels der besagten Kommunikation kann dann beispielsweise ein jeweiliges Kraftfahrzeug einen Ladevorgang anmelden oder reservieren, woraufhin die Steuerzentrale, beispielsweise nach Erfüllung einer vorbestimmten Zulassungsvoraussetzung, beispielsweise einer Bezahlung oder einer Angabe einer Bezahlverbindung, eine der Ladeschnittstellen für das Kraftfahrzeug freischalten kann, das heißt die elektrisch Verbindung durch Elektrisch-leitend-Schalten der Blockiereinrichtung freigeben kann.

Eine Ausführungsform sieht vor, dass bei zumindest einem der Kraftfahrzeuge dessen Abgriffseinrichtung zumindest eine elektrische Kontakteinheit aufweist, um eine elektrische Verbindung mit einer jeweiligen Gegenkontakteinheit einer der Ladeschnittstellen bereitzustellen. Das Ladesystem, z.B. die Steuereinrichtung des jeweiligen Kraftfahrzeugs, kann dazu eingerichtet sein, während die jeweilige Kontakteinheit die jeweilige Gegenkontakteinheit berührt, eine Kontaktbewegung auszulösen, durch welche die Kontakteinheit an der Gegenkontakteinheit einmal oder mehrmals entlang reibt. Eine jeweilige Kontakteinheit kann beispielsweise durch eine elektrisch leitfähige Platte, beispielsweise eine Kupferplatte oder Aluminiumplatte, realisiert sein. Eine Gegenkontakteinheit kann ebenfalls durch eine jeweils elektrisch leitfähige Platte der genannten Art realisiert sein. Durch Reiben der Kontakteinheit an der jeweiligen Gegenkontakteinheit ergibt sich der Vorteil, dass Korrosion und/oder eine Oberflächenverschmutzung an der Kontakteinheit und der Gegenkontakteinheit abgerieben wird. Hierdurch verringert sich dann der Kontaktwiderstand.

Eine Ausführungsform sieht vor, dass das Ladesystem die besagte Kontaktbewegung erzeugt, indem ein Fahrantriebsmotor des Kraftfahrzeugs dieses vor- und/oder zurückrollt und/oder gegen die Ladeschnittstelle drückt und/oder indem das Kraftfahrzeug mittels seines Fahrwerks wankt (seitliches Kippen) und/oder nickt (vorwärts und/oder rückwärts Kippen) und/oder indem eine Aktuatoreinrichtung zum Bewegen der zumindest einen Kontakteinheit und/oder der Gegenkontakteinheit diese jeweils relativ zu einem Rest des Kraftfahrzeugs bewegt. Die Nutzung des Fahrantriebsmotors und/oder des Fahrwerks weist den Vorteil auf, dass keine zusätzliche Aktuatoreinrichtung für die Kontaktbewegung notwendig ist. Es kann das gesamte Fahrzeug oder der auf dem Fahrwerk gelagerte Teil des Kraftfahrzeugs bewegt werden.

Eine Aktuatoreinrichtung weist dagegen den Vorteil auf, dass das Kraftfahrzeug selbst keinen Bewegungsfreiraum für die Kontaktbewegung benötigt. Die Aktuatoreinrichtung kann auf der Grundlage zumindest eines Elektromotors realisiert sein. Die Aktuatoreinrichtung kann auch zumindest einen Piezoaktuator für eine Vibration der zumindest einen Kontakteinheit aufweisen.

Eine Ausführungsform sieht vor, dass die Verteilungseinrichtung zum Verteilen der Gleichspannung Stromschienen und/oder Kabel aufweist. Als Material kann hierbei Kupfer und/oder Aluminium vorgesehen sein. Die Verteilungseinrichtung ist hierdurch technisch besonders einfach ausgestaltet. Insbesondere ist vorgesehen, dass zumindest ein Teil der Verteilungseinrichtung mobil und temporär installierbar ausgestaltet ist. Es kann also zum Beispiel ein Kabel zum Verlegen vorgesehen sein, z.B. zum Verlegen auf einem Parkplatz. Das Kabel kann eine Schutzummantelung zur mechanischen Stabilisierung als Überfahrschutz aufweisen. Insgesamt weist dies den Vorteil auf, dass das Ladesystem temporär installierbar ist, beispielsweise im Zusammenhang mit der Nutzung einer Freifläche als temporärer Parkplatz, wie es beispielsweise bei einer Großveranstaltung notwendig sein kann.

Eine Ausführungsform sieht vor, dass an der Wandlereinrichtung eine Wärmetauscheinrichtung vorsieht, eine Abwärme der Wandlereinrichtung in einen Heizkreislauf einer Heizeinrichtung zu übertragen. Indem eine zentrale Wandlereinrichtung die gesamte Wandlung für die stationäre Ladevorrichtung durchführt, ist auch die Entstehung der Abwärme auf die Wandlereinrichtung konzentriert. Damit lässt sich die Abwärme mittels einer Wärmetauscheinrichtung abgreifen und einem Heizkreislauf einer Heizeinrichtung zuführen. Die Heizeinrichtung kann beispielsweise Bestandteil eines Gebäudes sein. Wegen der örtlich zentralen Anordnung kann die Wärmetauscheinrichtung einfach ausgestaltet sein.

Um das erfindungsgemäße Ladesystem zu realisieren, sind eine stationäre Ladevorrichtung und Kraftfahrzeuge notwendig, die jeweils ebenfalls Bestandteil der Erfindung sind.

Die erfindungsgemäße stationäre Ladevorrichtung für das erfindungsgemäße Ladesystem weist die zentrale Wandlereinrichtung auf, die dazu eingerichtet ist, die besagte Wechselspannung des elektrischen Versorgungsnetzes in die Gleichspannung umzuwandeln. Die Verteilungseinrichtung der Ladevorrichtung ist dazu eingerichtet, die Gleichspannung ohne einen weiteren Wandlerschritt, also ungewandelt, von der Wandlereinrichtung auf mehrere Ladeschnittstellen zu verteilen. Jede der Ladeschnittstellen stellt somit die gleiche von der Wandlereinrichtung erzeugte Gleichspannung für jeweils eines von mehreren Kraftfahrzeugen des Ladesystems bereit. Durch die Ladeschnittstellen ist jeweils eine Abgriffsmöglichkeit zum Abgreifen eines elektrischen Strom bereitgestellt.

Das erfindungsgemäße Kraftfahrzeug für das erfindungsgemäße Ladesystem weist eine Abgriffseinrichtung zum Abgreifen der Gleichspannung an jeweils einer von mehreren Ladeschnittstellen des Ladesystems auf. Die Abgriffseinrichtung ist mit einem Energiespeicher des Kraftfahrzeugs über einen fahrzeugeigenen Gleichspannungswandler gekoppelt. Der Energiespeicher kann beispielsweise eine elektrische Batterie oder ein elektrischer Akkumulator sein. Der Energiespeicher kann für eine Betriebsspannung in einem Bereich größer als 30 Volt, insbesondere größer als 60 Volt, vorgesehen sein. Eine Steuereinrichtung des Kraftfahrzeugs ist dazu eingerichtet, einen zwischen der Ladeschnittstelle und dem Energiespeicher fließenden Ladestrom durch Steuern des Gleichspannungswandlers einzustellen. Der Gleichspannungswandler kann insbesondere ein Hochsetzsteller sein. Dann kann eine Gleichspannung an der Ladeschnittstelle genutzt werden, die kleiner als die Betriebsspannung des Energiespeichers ist. Im Falle eines bidirektional betreibbaren Gleichspannungswandlers kann elektrische Energie auch aus dem Energiespeicher an die Ladeschnittstelle übertragen werden.

Durch den Betrieb des Ladesystems ergibt sich ein Verfahren, das ebenfalls Bestandteil der Erfindung ist. Das erfindungsgemäße Verfahren dient zum Aufladen eines jeweiligen elektrischen Energiespeichers mehrerer Kraftfahrzeuge, wobei aus einer Wechselspannung eines elektrischen Versorgungsnetzes durch eine zentrale Wandlereinrichtung eine Gleichspannung erzeugt wird und die Gleichspannung durch eine Verteilungseinrichtung auf mehrere Ladeschnittstellen verteilt wird, ohne hierbei noch einmal gewandelt zu werden. An den Ladeschnittstellen wird also die gleiche Gleichspannung für alle Kraftfahrzeuge bereitgestellt.

Das Verfahren kann des Weiteren vorsehen, dass jedes Kraftfahrzeug dann die Gleichspannung mittels einer eigenen Abgriffseinrichtung abgreift und die abgegriffene Gleichspannung mittels eines fahrzeugeigenen Gleichspannungswandlers umwandelt und die umgewandelte Gleichspannung an dem Energiespeicher des Kraftfahrzeugs bereitstellt. Eine Steuereinrichtung steuert hierbei den Gleichspannungswandler und stellt hierdurch den Ladestrom in Bezug auf seine Stromstärke und/oder eine übertragene elektrische Ladeleistung ein.

Zu der Erfindung gehören auch Weiterbildungen der erfindungsgemäßen Ladevorrichtung, des erfindungsgemäßen Kraftfahrzeugs und des erfindungsgemäßen Verfahrens, die Merkmale aufweisen, wie sie bereits im Zusammenhang mit den Weiterbildungen des erfindungsgemäßen Ladesystems beschrieben worden sind. Aus diesem Grund sind die entsprechenden Weiterbildungen des erfindungsgemäßen Kraftfahrzeugs hier nicht noch einmal beschrieben.

Die Erfindung umfasst auch die Kombinationen der beschriebenen Ausführungsformen.

Im Folgenden sind Ausführungsbeispiele der Erfindung beschrieben. Hierzu zeigt:
- Fig. 1: eine schematische Darstellung einer Ausführungsform des erfindungsgemäßen Ladesystems;
- Fig. 2: eine schematische Darstellung einer weiteren Ausführungsform des erfindungsgemäßen Ladesystems;
- Fig. 3: eine schematische Darstellung einer weiteren Ausführungsform des erfindungsgemäßen Ladesystems;
- Fig. 4: eine schematische Darstellung einer weiteren Ausführungsform des erfindungsgemäßen Ladesystems;
- Fig. 5: eine schematische Darstellung einer weiteren Ausführungsform des erfindungsgemäßen Ladesystems mit einer Kommunikationseinrichtung;
- Fig. 6: eine schematische Darstellung einer Ausführungsform des erfindungsgemäßen Kraftfahrzeugs;
- Fig. 7: eine schematische Darstellung einer weiteren Ausführungsform des erfindungsgemäßen Kraftfahrzeugs;
- Fig. 8: eine schematische Darstellung einer weiteren Ausführungsform des erfindungsgemäßen Kraftfahrzeugs; und
- Fig. 9: ein Flussschaudiagramm einer Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

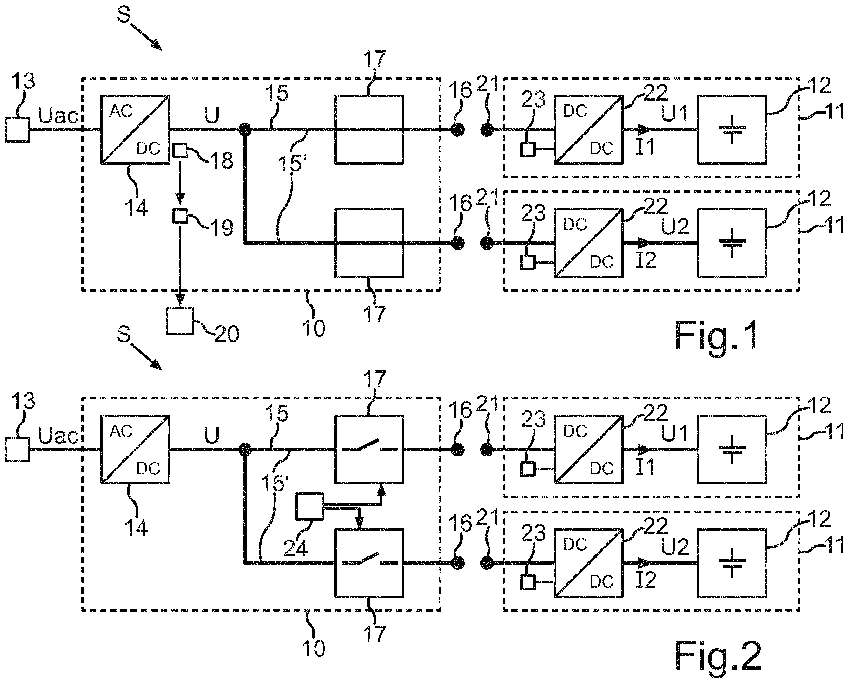

Fig. 1 zeigt eine stationäre Ladevorrichtung 10, an welcher Kraftfahrzeuge 11 mit elektrischer Energie oder Ladeleistung zum Aufladen oder Nachladen eines jeweiligen elektrischen Energiespeichers 12 des jeweiligen Kraftfahrzeugs 11 versorgt werden können. Ein Energiespeicher 12 kann beispielsweise auf der Grundlage einer Batterie oder eines elektrischen Akkumulators, insbesondere einer Hochvolt-Batterie, realisiert sein. Die Ladevorrichtung 10 und die Kraftfahrzeuge 11 stellen zusammen ein System S dar, da die Ladevorrichtung 10 und die Kraftfahrzeuge 11 aufeinander abgestimmt ausgestaltet sind und betrieben werden können.

Die Ladevorrichtung 10 kann beispielsweise in einem Parkhaus oder auf einem Parkplatz installiert sein.

Die Ladevorrichtung 10 stellt eine Ladeinfrastruktur bereit, mittels welcher eine Wechselspannung Uac aus einem elektrischen Versorgungsnetz 13 mittels einer zentralen Wandlereinrichtung 14 in eine Gleichspannung U gewandelt werden kann, die dann mittels einer elektrischen Verteilungseinrichtung 15 der Ladevorrichtung 10 auf mehrere örtlich beabstandete Ladeschnittstellen 16 verteilt werden kann. An den Ladeschnittstellen 16 wird also die Gleichspannung U bereitgestellt. Es können z.B. mehrere Parkplätze für die Kraftfahrzeuge 11 vorgesehen sein und an jedem der Parkplätze kann eine der Ladeschnittstellen 16 angeordnet sein. Die Gleichspannung U kann vom Betrag hier insbesondere kleiner als 60 Volt oder 60 Volt betragen. Die Gleichspannung U kann auch größer als 60V sein. Es können dann HVsichere Steckverbindung (HV - Hochvolt) vorgesehen sein.

Die Verteilungseinrichtung 15 kann beispielsweise auf der Grundlage einer Stromschienenanordnung und/oder Kabelanordnung mit zumindest einer Stromschiene und/oder zumindest einem Kabel 15' realisiert oder gebildet sein. Die zumindest eine Stromschiene und/oder das zumindest eine Kabel 15' kann hierbei permanent oder temporär installiert sein.

Für jede oder einige oder eine der Ladeschnittstellen 16 kann dabei noch eine Blockiereinrichtung 17 bereitgestellt sein. In Fig. 1 ist als Blockiereinrichtung beispielhaft eine Sicherung als Schutzmaßnahme vorgesehen.

Bei der Wandlereinrichtung 14 kann mittels einer Wärmetauscheinrichtung 18 eine in der Wandlereinrichtung 14 im Betrieb entstehende Abwärme 19 abgeführt und beispielsweise in einen Heizkreislauf 20 einer Heizeinrichtung beispielsweise eines Gebäudes abgeführt oder überführt werden.

Jedes der Kraftfahrzeuge 11 ist selbstständig in der Lage, aus der an der jeweiligen Ladeschnittstelle 16 bereitgestellten Gleichspannung U eine Ladespannung U1, U2 für seinen jeweiligen Energiespeicher 12 zu erzeugen, um diesen nachzuladen. Ein Kraftfahrzeug 11 kann hierzu mittels einer Abgriffseinrichtung 21 an einer der Ladeschnittstellen 16 die dort bereitgestellte Gleichspannung U abgreifen und mittels eines eigenen Gleichspannungswandlers 22 in die jeweilige Ladespannung U1, U2 wandeln. Zumindest eine der Ladespannungen U1, U2 kann dabei von der Gleichspannung verschieden sein. Durch Einstellen des Betrags der Ladespannung U1, U2 wird eine Stromstärke eines Ladestroms I1, I2 und/oder eine übertragene Ladeleistung eingestellt. Der Betrag der Ladespannung U1, U2 kann hierzu durch eine jeweilige Steuereinrichtung 23 des Kraftfahrzeugs 11 eingestellt werden, sodass hierdurch indirekt der Ladestrom I1, I2 und/oder die Ladeleistung eingestellt wird. Die Steuereinrichtung 23 kann auf der Grundlage eines Steuergeräts und/oder einer elektronischen Schaltung realisiert sein.

Fig. 2 veranschaulicht eine Variante des Ladesystems S, bei welcher die Blockiereinrichtungen 17 der Ladeschnittstellen 16 schaltbar ausgestaltet sein können, also beispielsweise eine Schalteinrichtung in Form von beispielsweise einem jeweiligen Schütz oder mehreren Schützen aufweisen können. Eine Steuerzentrale 24 der Ladevorrichtung 10 kann jede Blockiereinrichtung 17 entsprechend elektrisch sperrend oder elektrisch leitend schalten, und zwar unabhängig von den übrigen Blockiereinrichtungen. Die Steuerzentrale 24 kann auf der Grundlage beispielsweise eines Zentralcomputers und/oder einer elektronischen Schaltung realisiert sein. Die Blockiereinrichtung 17 kann zusätzlich zu der Schaltvorrichtung auch eine Schutzvorrichtung beinhalten, wie sie im Zusammenhang mit Fig. 1 beschrieben wurde.

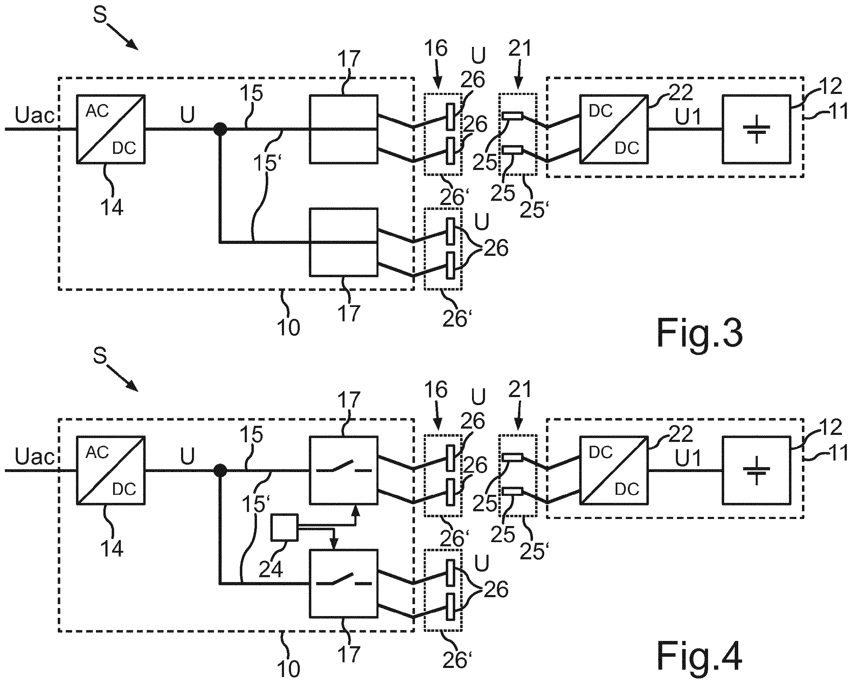

Fig. 3 veranschaulicht, wie die Ladeschnittstellen 16 und entsprechend die Abgriffseinrichtung 21 zweipolig ausgestaltet sein können, um hierdurch zwischen den beiden Polen die Gleichspannung U abgreifen zu können. Die Abgriffseinrichtung 21 kann hierzu elektrische Kontakteinheiten 25 aufweisen, die beispielsweise Kupfer und/oder Aluminium aufweisen können. Die Kontakteinheiten 25 bilden zusammen ein Kontaktpaar 25'. Zu jeder Kontakteinheit 25 des Kontaktpaars 25' kann jede Ladeschnittstelle 16 jeweils eine Gegenkontakteinheit 26 aufweisen, die zusammen ein Gegenkontaktpaar 26' darstellen. Die Gegenkontakteinheiten 26 können auf der Grundlage von Kupfer und/oder Aluminium realisiert sein. Das Kontaktpaar 25' kann relativbeweglich zu einem Rest des Kraftfahrzeugs 11 ausgestaltet sein. Das Gegenkontaktpaar 26' kann relativbeweglich zu einem Rest der Ladevorrichtung 10 ausgestaltet sein.

Fig. 4 veranschaulicht eine Ausführungsform mit den besagten Kontakteinheiten 25 und Gegenkontakteinheiten 26 sowie den schaltbaren Blockiereinrichtungen 17 mit Steuerzentrale 24.

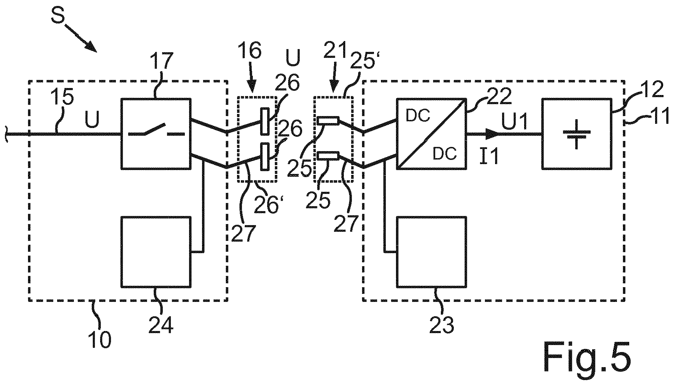

Fig. 5 veranschaulicht, wie eine Kommunikation zwischen einer Steuereinrichtung 23 eines Kraftfahrzeugs 11 einerseits und der Steuerzentrale 24 der Ladevorrichtung 10 andererseits ermöglicht sein kann, damit von dem Kraftfahrzeug 11 aus eine Ladeschnittstelle 16 freigeschaltet oder durchgeschaltet werden kann, sodass die Gleichspannung U an der Ladeschnittstelle 16 zum Abgriff durch die Abgriffseinrichtung 21 eines Kraftfahrzeugs 11 bereit steht. Hierzu wird die Blockiereinrichtung 17 von einem elektrisch sperrenden in einen elektrisch leitenden Zustand geschaltet. Die Kommunikation kann hierbei in der in Fig. 5 veranschaulichten Ausführungsform über die Abgriffseinrichtung 21 und die Ladeschnittstelle 16 kabelgebunden erfolgen. Es kann hierbei ein jeweiliges elektrisches Leitelement 27 der Abgriffseinrichtung 21 und der Ladeschnittstelle 16 für eine Signalübertragung genutzt werden. Ein solches Leitelement 27 kann ein Kabel oder eine Stromschiene sein. Es kann die sogenannte PLC (Power Line Communication) genutzt werden und hierbei beispielsweise auf den Standard ISO 15118 zurückgegriffen werden.

Die Steuereinrichtung 23 kann beispielsweise signalisieren, dass sie zum Abgriff der Gleichspannung U berechtigt und/oder bereit ist. Entsprechend kann dann die Steuerzentrale 24 die Blockiereinrichtung 17 in diesem Fall von dem elektrisch sperrenden Zustand in den elektrisch leitenden Zustand schalten. Es steht dann die Gleichspannung U an der Ladeschnittstelle 16 zur Verfügung und kann durch die Abgriffseinrichtung 21 in der beschriebenen Weise zum Erzeugen der Ladespannung U1 und des Ladestroms I1 erzeugt werden.

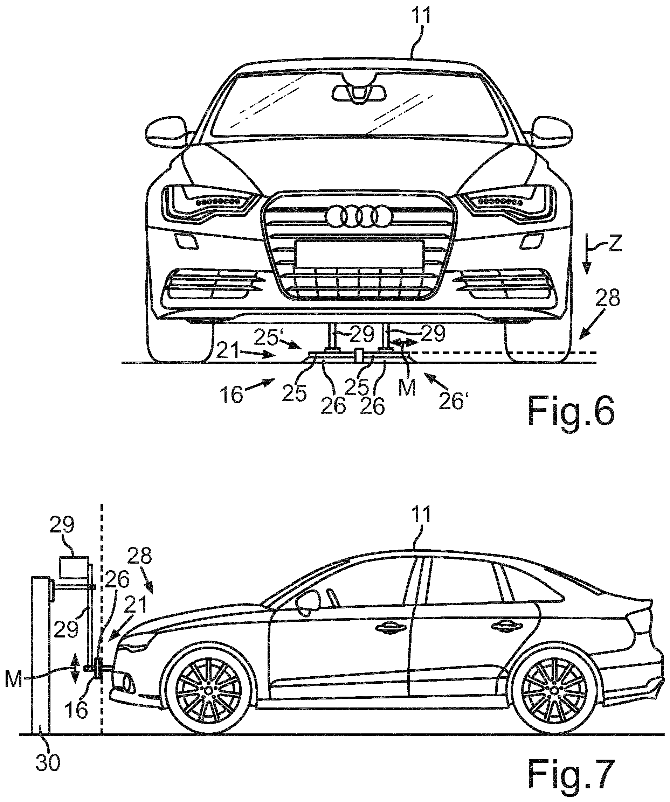

Fig. 6 veranschaulicht eine Frontalansicht einer Ausführungsform eines Kraftfahrzeugs 11 des Ladesystems. Dargestellt ist, wie eine Ladeschnittstelle 16 für das Kraftfahrzeug 11 unterhalb oder bodenseitig auf einem Parkplatz 28 bereitgestellt sein kann. Dargestellt ist, wie die Abgriffseinrichtung 21 relativbeweglich zum Rest des Kraftfahrzeugs 11 ausgestaltet sein kann, indem eine Aktuatoreinrichtung 29 die elektrischen Kontakteinheiten 25 des Kontaktpaars 25' beispielsweise vertikal entlang einer z-Richtung Z bewegen kann (sogenannte Z-Mover). Die elektrischen Kontakteinheiten 25 können hierbei beispielsweise jeweils als Stempel ausgestaltet sein, die mittels der Aktuatoreinrichtung 29 nach unten hin zum Boden des Parkplatzes 28 ausgefahren werden können, wo sich die Gegenkontakteinheiten 26 des Gegenkontaktpaars 26' befinden kann. Es kann auch anders herum vorgesehen sein (nicht dargestellt), die Gegenkontakteinheiten 26 entlang der z-Richtung Z hin zu einem Fahrzeugboden des Kraftfahrzeugs 11 zu bewegen, wo sich die Kontakteinheiten 25 befinden können.

Fig. 7 veranschaulicht, wie die Abgriffseinrichtung 21 frontal an einer Front des Kraftfahrzeugs 11 angeordnet sein kann. Die Ladeschnittstelle 16 kann hierbei beispielsweise an einer Wand 30, die einen Parkplatz 28 begrenzt, angeordnet sein. Hierbei kann beispielsweise eine Aktuatoreinrichtung 29 für die Gegenkontakteinheiten 26 bereitgestellt sein.

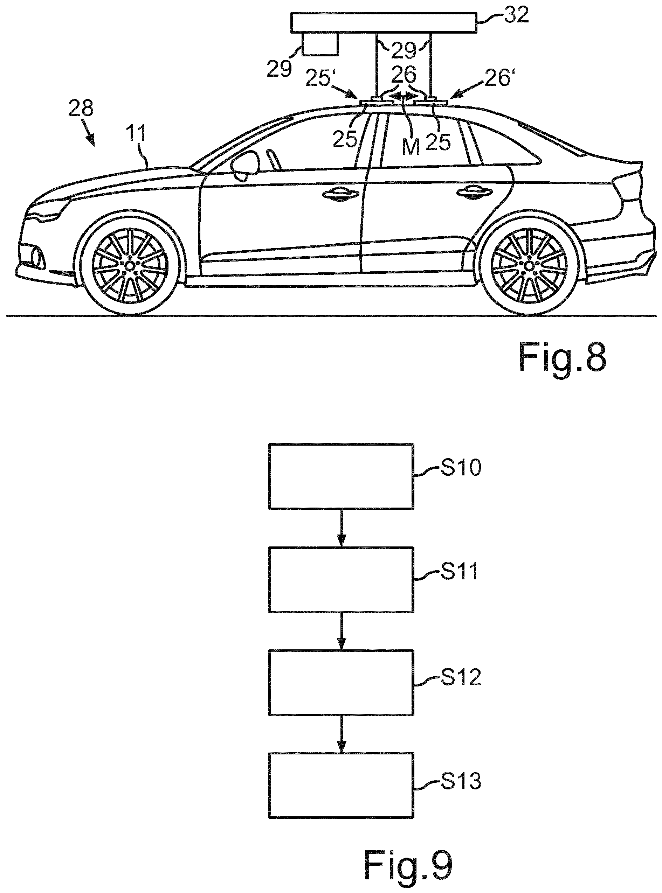

Fig. 8 veranschaulicht, wie auf einem Parkplatz 28 das Gegenkontaktpaar 26' mit den Gegenkontakteinheiten 26 an einer Decke 32 oberhalb des Parkplatzes 28 angeordnet sein kann. Die Kontakteinheiten 25 des Kontaktpaars 25 kann beispielsweise an einem Dach des Kraftfahrzeugs 11 bereitgestellt sein. Eine Aktuatoreinrichtung 29 kann beispielsweise dazu ausgestaltet sein, die Gegenkontakteinheiten 26 auf das Fahrzeug 16 abzusenken. Hierzu kann die Aktuatoreinrichtung 29 beispielsweise die beschriebenen Stempel aufweisen.

Fig. 10 veranschaulicht ein Verfahren, wie es zum Aufladen eines Kraftfahrzeugs 11 oder mehrerer Kraftfahrzeuge 11 in dem Ladesystem S durchgeführt werden kann.

Mittels der Aktuatoreinrichtung 29 kann auch eine Kontaktbewegung M der Kontakteinheit 25' relativ zur Gegenkontakteinheit 26' vorgesehen sein, um beispielsweise Korrosionsrückstände oder Verdreckung an einer Kontaktfläche zwischen der Kontakteinheit 25' und der Gegenkontakteinheit 26' abzureiben. Dies verringert den Kontaktwiderstand.

In einem Schritt S10 kann aus einer Wechselspannung eines Versorgungsnetzes durch eine zentrale Wandlereinrichtung der Ladevorrichtung eine Gleichspannung U erzeugt werden. In einem Schritt S11 kann die Gleichspannung U durch eine Verteilungseinrichtung 15 auf mehrere Ladeschnittstellen 16 verteilt werden, ohne hierbei noch einmal gewandelt zu werden. IN einem Schritt S12 kann an den Ladeschnittstellen 16 die Gleichspannung U für alle Kraftfahrzeuge 11 bereitgestellt werden. In einem Schritt S13 kann jedes der Kraftfahrzeuge 11 dann die Gleichspannung U mittels einer eigenen Abgriffseinrichtung 21 abgreifen und die abgegriffene Gleichspannung U mittels eines fahrzeugeigenen Gleichspannungswandlers 22 umwandeln und die umgewandelte Gleichspannung U1 an den Energiespeicher 12 des Kraftfahrzeugs 11 bereitstellen, wobei eine Steuereinrichtung 23 des Kraftfahrzeugs 11 den Gleichspannungswandler 22 steuert und hierdurch den Ladestrom I1, I2 und/oder eine übertragene Ladeleistung einstellt.

Insgesamt zeigen die Beispiele, wie durch die Erfindung ein Ladesystem mit konstanter Gleichspannung zwischen Fahrzeugen und einer Ladeinfrastruktur bereitgestellt werden kann, das das Potential hat, in einem Ladepark eine zentrale Wandlereinrichtung zu verwenden.

## Patentansprüche

1. Ladesystem (S) zum Aufladen eines jeweiligen elektrischen Energiespeichers (12) mehrerer Kraftfahrzeuge (11), umfassend eine stationäre Ladevorrichtung (10) und die Kraftfahrzeuge (11), wobei
eine zentrale Wandlereinrichtung (14) der Ladevorrichtung (10) dazu eingerichtet ist, eine Wechselspannung (Uac) eines elektrischen Versorgungsnetzes (13) in eine Gleichspannung (U) umzuwandeln, **dadurch gekennzeichnet, dass**
eine Verteilungseinrichtung (15) der Ladevorrichtung (10) dazu eingerichtet ist, die Gleichspannung (U) ohne einen weiteren Wandlerschritt von der Wandlereinrichtung (14) auf mehrere Ladeschnittstellen (16) zu verteilen, und
jede der Ladeschnittstellen (16) die gleiche, von der Wandlereinrichtung (14) erzeugte Gleichspannung (U) für jeweils eines der Kraftfahrzeuge (11) bereitstellt und
jedes der Kraftfahrzeuge (11) jeweils eine Abgriffseinrichtung (21) zum Abgreifen der an jeweils einer der Ladeschnittstellen (16) bereitgestellten Gleichspannung (U) aufweist, wobei die Abgriffseinrichtung (21) mit dem jeweiligen Energiespeicher (12) des Kraftfahrzeugs (11) über einen fahrzeugeigenen Gleichspannungswandler (22) gekoppelt ist und eine Steuereinrichtung (23) des Kraftfahrzeugs (11) dazu eingerichtet ist, einen zwischen der Ladeschnittstelle (16) und dem Energiespeicher (12) fließenden elektrischen Ladestrom (I1, I2) und/oder eine übertragene elektrische Ladeleistung durch Steuern des Gleichspannungswandlers (22) einzustellen.

2. Ladesystem (S) nach Anspruch 1, wobei die Gleichspannung (U) kleiner als 60 Volt ist.

3. Ladesystem (S) nach einem der vorhergehenden Ansprüche, wobei einige oder jede der Ladeschnittstellen (16) jeweils eine Blockiereinrichtung (17) zum Blockieren eines Stromaustritts aus der Ladeschnittstelle (16) aufweisen, wobei die jeweilige Blockiereinrichtung (17) dazu eingerichtet ist, den Strom selbständig bei Überschreiten eines Höchststromwerts zu blockieren, und/oder wobei die jeweilige Blockiereinrichtung (17) durch eine Steuerzentrale (24) der Ladevorrichtung (10) und/oder durch die jeweilige Steuereinheit (23) schaltbar ausgestaltet ist.

4. Ladesystem (S) nach einem der vorhergehenden Ansprüche, wobei die jeweilige Abgriffseinrichtung (21) zumindest eines der Kraftfahrzeuge (11) zumindest eine elektrische Kontakteinheit (25') für einen elektrischen Kontakt mit einer jeweiligen Gegenkontakteinheit (26') einer der Ladeschnittstellen (16) aufweist und das Ladesystem (S) dazu eingerichtet ist, während die jeweilige Kontakteinheit (25') an der jeweiligen Gegenkontakteinheit (26') berührt, eine Kontaktbewegung (M) auszulösen, durch welche die Kontakteinheit (25') an der Gegenkontakteinheit (26') einmal oder mehrmals entlang reibt.

5. Ladesystem (S) nach Anspruch 4, wobei das Ladesystem (S) die Kontaktbewegung (M) erzeugt, indem ein Antriebsmotor des jeweiligen Kraftfahrzeugs (11) dieses vor und/oder zurück rollt und/oder gegen die Ladeschnittstelle (16) drückt und/oder indem das Kraftfahrzeug (11) mittels eines Fahrwerks wankt und/oder nickt und/oder indem eine Aktuatoreinrichtung (29) zum Bewegen der zumindest einen Kontakteinheit (25') und/oder der Gegenkontakteinheit (26') diese jeweils relativ zu einem Rest des Kraftfahrzeugs (11) bewegt.

6. Ladesystem (S) nach einem der vorhergehenden Ansprüche, wobei die Verteilungseinrichtung (15) zum Verteilen der Gleichspannung (U) Stromschienen (15') und/oder Kabel (15') aufweist, wobei insbesondere zumindest ein Teil der Verteilungseinrichtung (15) mobil und temporär installierbar ausgestaltet ist.

7. Ladesystem (S) nach einem der vorhergehenden Ansprüche, wobei an der Wandlereinrichtung (14) eine Wärmetauscheinrichtung (18) vorsieht, eine Abwärme (19) der Wandlereinrichtung (14) in einen Heizkreislauf (20) einer Heizeinrichtung zu übertragen.

8. Stationäre Ladevorrichtung (10) für ein Ladesystem (S) nach einem der vorhergehenden Ansprüche, wobei eine zentrale Wandlereinrichtung (14) der Ladevorrichtung (10) dazu eingerichtet ist, eine Wechselspannung (Uac) eines elektrischen Versorgungsnetzes (13) in eine Gleichspannung (U) umzuwandeln, und eine Verteilungseinrichtung (15) der Ladevorrichtung (10) dazu eingerichtet ist, die Gleichspannung (U) ohne einen weiteren Wandlerschritt von der Wandlereinrichtung (14) auf mehrere Ladeschnittstellen (16) zu verteilen, und jede der Ladeschnittstellen (16) jeweils die gleiche von der Wandlereinrichtung (14) erzeugte Gleichspannung (U) für jeweils eines von mehreren Kraftfahrzeugen (11) des Ladesystems (S) bereitstellt.

9. Kraftfahrzeug (11) für ein Ladesystem (S) nach einem der Ansprüche, wobei eine Abgriffseinrichtung (21) zum Abgreifen einer Gleichspannung (U) an jeweils einer von mehreren Ladeschnittstellen (16) des Ladesystems (S) aufweist und die Abgriffseinrichtung (21) mit einem Energiespeicher (12) des Kraftfahrzeugs (11) über einen fahrzeugeigenen Gleichspannungswandler (22) gekoppelt ist und eine Steuereinrichtung (23) des Kraftfahrzeugs (11) dazu eingerichtet ist, einen zwischen der Ladeschnittstelle (16) und dem Energiespeicher (12) fließenden Ladestrom und/oder eine übertragene elektrische Ladeleistung durch Steuern des Gleichspannungswandlers (22) einzustellen.

10. Verfahren zum Aufladen eines jeweiligen elektrischen Energiespeichers (12) mehrerer Kraftfahrzeuge (11), wobei aus einer Wechselspannung (Uac) eines elektrischen Versorgungsnetzes (13) durch eine zentrale Wandlereinrichtung (14) eine Gleichspannung (U) erzeugt wird, **dadurch gekennzeichnet, dass**
die Gleichspannung (U) durch eine Verteilungseinrichtung (15) auf mehrere Ladeschnittstellen (16) verteilt wird, ohne hierbei noch einmal gewandelt zu werden, an den Ladeschnittstellen (16) die gleiche Gleichspannung (U) für alle Kraftfahrzeuge (11) bereitgestellt wird.
